# EUROPEAN PATENT APPLICATION

(11) **EP 4 760 437 A1**
(43) Date of publication of application: **17.06.2026**
(21) Application number: 24850775.8
(22) Date of filing: 18.07.2024
(51) Int. Cl.: G05D 1/43

(54) **AUTONOMOUS MOBILE DEVICE, CONTROL METHOD AND APPARATUS THEREFOR, AND STORAGE MEDIUM**

(30) Priority: 08.08.2023 CN 202310993355
(71) Applicant: Qfeeltech (Beijing) Co., Ltd., Beijing 100191 (CN)
(72) Inventor: GAO, Shaoxuan, Beijing 100191 (CN)
(74) Representative: Carpmaels & Ransford LLP
(86) International application number: PCT/CN2024/106151
(87) International publication number: WO 2025/031125

(57) **Abstract**

An autonomous mobile device, a control method therefor, and a storage medium. The method comprises: a photographing step: photographing an image of a working environment of an autonomous mobile device (S110); a ranging step: acquiring point cloud data of the working environment of the autonomous mobile device (S120); a recognition step: inputting the image into an image object recognition model for recognition, to obtain an object in the image and the spatial range of a detection frame in which the object is located (S130); an acquisition step: acquiring the number of pieces of point cloud data within the spatial range of the detection frame (S140); a determination step: determining whether the number of pieces of point cloud data exceeds a preset number threshold (S150); and an object positioning step: when the number of pieces of point cloud data exceeds the preset number threshold, on the basis of the point cloud data within the spatial range of the detection frame, calculating the spatial position of the detection frame (S160). According to the control method for the autonomous mobile device, the accuracy of recognizing an obstacle and avoiding the obstacle can be improved, thereby improving the degree of intelligence of the autonomous mobile device.

## Description

### TECHNICAL FIELD

The present disclosure relates to the field of smart home technologies, and in particular, to an autonomous mobile apparatus, a control method and device thereof, and a storage medium.

### BACKGROUND

Autonomous mobile apparatus refers to an apparatus that moves autonomously to execute preset tasks in a set work area. At present, autonomous mobile apparatus generally comprises, but are not limited to, Robot Vacuum Cleaners (such as intelligent floor sweepers, intelligent floor mopping machines, window cleaning robots), companion mobile robots (such as intelligent electronic pets, babysitter robots), service mobile robots (such as reception robots at hotels, hostels, meeting places), industrial inspection intelligent apparatus (such as electric inspection robots, intelligent forklifts, etc.), and security robots (such as household or commercial intelligent guard robots). With the increasing degree of intelligence of autonomous mobile apparatus, some autonomous mobile apparatus can adopt deep learning models to recognize objects in the environment. However, the object recognition based on the existing deep learning model often leads to misrecognition, for example, the category of the object is incorrectly recognized, which leads to a false determination of whether the object actually exists; and the position of the object is incorrectly determined when the object actually exists.

Therefore, how to improve the accuracy of object recognition on the autonomous mobile apparatus is one of the problems that the autonomous mobile apparatus needs to solve in the future.

### SUMMARY

In view of this, the present disclosure provides an autonomous mobile apparatus, a control method and device thereof, and a storage medium, which can improve the accuracy of object recognition.

According to a first aspect of the present disclosure, there is provided a control method for an autonomous mobile apparatus, the method comprising: a capturing step, capturing an image of a work environment of the autonomous mobile apparatus; a ranging step, acquiring point cloud data of the work environment of the autonomous mobile apparatus; a recognizing step, inputting the image into an image object recognition model for recognition to obtain an object in the image and a spatial range of a detection box where the object is located; an acquiring step, acquiring a number of point cloud data within the spatial range of the detection box; a determining step, determining whether a number of the point cloud data exceeds a preset number threshold; an object positioning step, calculating the spatial position of the detection box based on the point cloud data within the spatial range of the detection box in response to the number of the point cloud data exceeding the preset number threshold.

According to a second aspect of the present disclosure, there is provided a control device for autonomous mobile apparatus, the device comprising: a capturing part configured to capture an image of a work environment of the autonomous mobile apparatus; a ranging part configured to acquire point cloud data of the work environment of the autonomous mobile apparatus; a recognizing part configured to input the image into an image object recognition model for recognition to obtain an object in the image and a spatial range of a detection box where the object is located; an acquiring part configured to acquire a number of point cloud data within the spatial range of the detection box; a determining part configured to determine whether a number of the point cloud data exceeds a preset number threshold; an object positioning part configured to calculate the spatial position of the detection box based on the point cloud data within the spatial range of the detection box in response to the number of the point cloud data exceeding the preset number threshold.

According to a third aspect of the present disclosure, there is provided a control device for autonomous mobile apparatus, the device comprising: a processor; and a memory for storing processor-executable instructions; wherein the processor is configured to implement the above control method in the first aspect when executing the instructions stored in the memory.

According to a fourth aspect of the present disclosure, there is provided an autonomous mobile apparatus, comprising: the above control device in the second aspect or the third aspect; and a moving part configured to move the autonomous mobile apparatus over a work surface in a work area.

According to a fifth aspect of the present disclosure, there is provided a non-transitory computer-readable storage medium, and when instructions in the storage medium are executed by a processor, the processor is enabled to execute the above control method in the first aspect.

Compared with the prior art in which only the recognition accuracy of the image object recognition model for the object in the image is improved, in the present disclosure, the image object recognition model is combined with the point cloud data, and the point cloud data is used to perform secondary confirmation on the object recognized by the image object recognition model, thus it may avoid misrecognition of the object or false determination of the position of the object, improving the accuracy of obstacle recognition and obstacle avoidance of the autonomous mobile apparatus, and further improving the degree of intelligence of the autonomous mobile apparatus.

Other features and aspects of the present disclosure will become apparent from the following detailed description of exemplary embodiments with reference to the accompanying drawings.

### BRIEF DESCRIPTION OF THE DRAWINGS

The accompanying drawings, which are incorporated in and constitute a part of this specification, illustrate exemplary embodiments, features, and aspects of the present disclosure and, together with the description, serve to explain the principles of the disclosure.
FIG. 1 shows a flowchart of a control method of an autonomous mobile apparatus according to an exemplary embodiment.
FIG. 2a shows a schematic diagram of an autonomous mobile apparatus according to an exemplary embodiment.
FIGS. 2b to 2c show schematic diagrams of application scenarios of an autonomous mobile apparatus according to an exemplary embodiment.
FIGS. 3a to 3e show angles involved in a spatial range of a detection box according to an exemplary embodiment.
FIGS. 4a to 4d show example diagrams of an image with a detection box displayed according to an exemplary embodiment.
FIG. 5 shows a flowchart of a control method of an autonomous mobile apparatus according to an exemplary embodiment.
FIG. 6 shows a block diagram of a control device of an autonomous mobile apparatus according to an exemplary embodiment.

### DETAILED DESCRIPTION

Various exemplary embodiments, features and aspects of the present disclosure will be described in detail below with reference to the accompanying drawings. The same reference numbers in the drawings indicate functionally the same or similar elements. While the various aspects of the embodiments are presented in drawings, the drawings are not necessarily drawn to scale unless specifically indicated.

The word "exemplary" is used exclusively herein to mean "serving as an example, embodiment, or illustration." Any embodiment described herein as "exemplary" is not necessarily to be construed as preferred or advantageous over other embodiments.

In addition, in order to better illustrate the present disclosure, numerous specific details are given in the following specific embodiments. It will be understood by those skilled in the art that the present disclosure may be practiced without some of the specific details. In some instances, methods, means, elements and circuits well known to those skilled in the art are not described in detail, so as to highlight the subject matter of the present disclosure.

In the related art, an image object recognition model (such as a deep learning model) is often used for intelligent object recognition. Specifically, the captured image may be input into a trained deep learning model, and the deep learning model outputs the object in the image or the category of the object. However, the deep learning model itself cannot acquire the distance information or coordinate information of the object in the image, so when the deep learning model is set on the autonomous mobile apparatus and the environmental object in the work area (usually the indoor space) is recognized with the movement of the autonomous mobile apparatus, misrecognition can be generated, which will lead to the recognition that an area that can be passed through being recognized as having an obstacle (for example, the texture of the floor is recognized as an obstacle, or the interface between the floor and the carpet is recognized as an obstacle), or even if the environmental object is accurately recognized, the position or distance of the environmental object is incorrectly determined, resulting in that the autonomous mobile apparatus still collides with the environmental object.

For example, when recognizing an environmental object by using the deep learning model, it may be recognized that there is a doorsill at a certain position in the work area, but the object at the position is not actually a doorsill but a carpet pattern. For the autonomous mobile apparatus, the carpet pattern does not belong to an obstacle; if only the deep learning model is used for object recognition, there may be misrecognition, and the autonomous mobile apparatus may perform inappropriate processing such as obstacle avoidance processing, crossing processing and the like based on the result of the misrecognition.

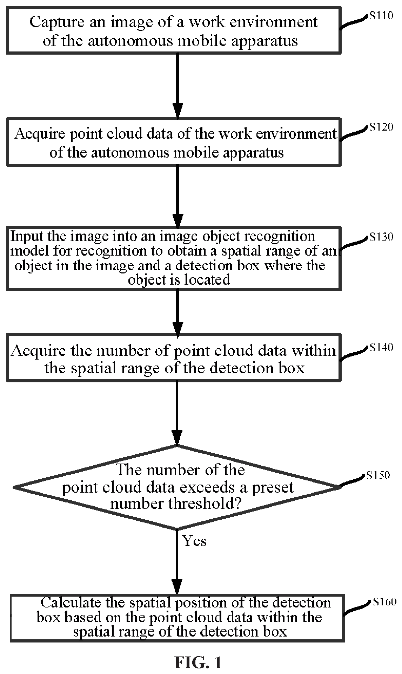

The present disclosure provides a control method for an autonomous mobile apparatus as shown in FIG. 1, and the control method is executed by the autonomous mobile apparatus. The execution timing of the control method for the autonomous mobile apparatus of the present disclosure is not specifically limited in the present disclosure. In a possible implementation, when the autonomous mobile apparatus is just powered on, the autonomous mobile apparatus may execute the control method shown in FIG. 1. Certainly, the control method in the embodiment may alternatively be executed after a period of time elapses after the autonomous mobile apparatus is powered on, when the execution condition is met, or the user actively sends the execution instruction.

It should be understood that the autonomous mobile apparatus refers to an intelligent mobile apparatus that executes a predetermined task on a work surface in a work area, and may comprise, but is not limited to: a robot vacuum cleaner (RVC), such as an intelligent sweeper, an intelligent mopping robot, a window cleaning robot, and the like; a logistics robot, a carrying robot, and the like; a weeding robot, an ice shovel robot, and the like; a companion mobile robot, such as an intelligent electronic pet, a babysitter robot; a service mobile robot, such as a reception robot at a hotel, a pub, or a meeting place; an industrial inspection intelligent apparatus, such as a power inspection robot, an intelligent forklift, and the like; and a security robot, such as a household or commercial intelligent guard robot. It should be noted that the autonomous mobile apparatus is not limited to the foregoing several types, and any intelligent apparatus with an autonomous mobile function should belong to the autonomous mobile apparatus described in the embodiment.

In the embodiment shown in FIG. 1, the control method for an autonomous mobile apparatus may comprise the following steps.

Step S110 (capturing step): capturing an image of the work environment of the autonomous mobile apparatus.

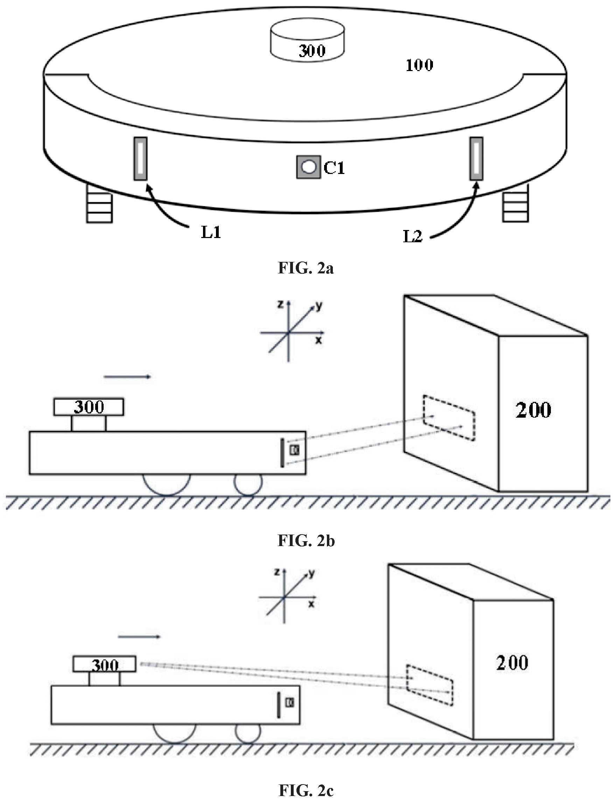

In the embodiment, an autonomous mobile apparatus provided with a surveillance camera runs in a work environment, and an image in the work environment is acquired through the surveillance camera. As shown in FIG. 2a, the surveillance camera C1 may be fixedly set on the autonomous mobile apparatus 100 and capture towards a certain direction (for example, the front of the autonomous mobile apparatus running forward) to acquire an image of the work environment corresponding to the direction. The above "running forward" of the autonomous mobile apparatus refers to the forward movement direction of the autonomous mobile apparatus during normal running, e.g., the positive direction of x-axis (the direction from left to right shown by the arrow in the figure) as shown in FIG. 2b and FIG. 2c; the so-called "normal running" refers to the movement of the autonomous mobile apparatus during task execution, which is different from abnormal running manners such as backward and swing of the autonomous mobile apparatus in the obstacle avoidance or escape mode. The above image of the work environment may sometimes comprise an object or a part of an object in the work environment (such as the object 200 shown in FIG. 2b or FIG. 2c), such as various objects in the work area, such as furniture, walls, appliances, footwear clothes, garbage cans, cartons, wires, doorsill, etc., in front of the autonomous mobile apparatus, within the capturing range of the surveillance camera, but the object in the image described in the present disclosure generally does not comprise the ground, that is, even if there is the ground in the image, the ground is not an obstacle that hinders the running of the autonomous mobile apparatus, so the ground does not serve as an object in the image, and the ground is not recognized by the image object recognition model later. In other words, since the technical solution of the present disclosure enables the autonomous mobile apparatus to avoid the object in the work environment by recognizing the object in the image, the object in the image described in the present disclosure is actually an obstacle, that is, an object that can hinder or limit the running of the autonomous mobile apparatus, and therefore does not comprise the ground.

It should be understood that the surveillance camera adopted in the capturing step S110 may be only an ordinary surveillance camera without adopting a depth surveillance camera, so an inexpensive monocular surveillance camera may be selected without adopting a complex and expensive binocular surveillance camera or structured light surveillance camera. Certainly, the present disclosure may also adopt a depth surveillance camera (such as a binocular surveillance camera or a structured light surveillance camera) or other types of surveillance cameras. The present disclosure does not limit the type of surveillance camera adopted.

Step S120 (ranging step): acquiring point cloud data of a work environment of the autonomous mobile apparatus.

During running of the autonomous mobile apparatus, point cloud data is collected and updated in real time as the autonomous mobile apparatus moves. When the autonomous mobile apparatus moves, spatial coordinates of the autonomous mobile apparatus in an absolute coordinate system may be obtained by using a positioning system or a positioning algorithm (for example, a Simultaneous Localization and Mapping (SLAM for short) algorithm), and at the same time, the autonomous mobile apparatus may calculate spatial coordinates (which may be relative coordinates or absolute coordinates) of point cloud data around the autonomous mobile apparatus.

In some embodiments, a ranging device such as a Laser Distance Sensor (LDS for short) or a Light Detection and Ranging (LIDAR for short) (such as the rotary laser radar 300 that emits a non-horizontal laser beam as shown in FIGS. 2a and 2c) may be used to emit a laser detection signal to the work environment of the autonomous mobile apparatus, and when the laser detection signal irradiates an object (the object refers to an obstacle in the present disclosure) in the work environment, a light spot is formed on the surface of the object (that is, a laser point is generated on the surface of the object by irradiating the object in the work environment and being blocked by the object in the work environment), and spatial coordinates of each laser point are calculated to obtain point cloud data, that is, the point cloud data is a light spot/laser point with known spatial coordinates. The spatial coordinates of each laser point in the point cloud data in the absolute coordinate system can be calculated according to the spatial coordinates (relative coordinates) of each laser point in the relative coordinate system of the autonomous mobile apparatus in combination with the coordinates of the autonomous mobile apparatus in the absolute coordinate system, as shown in FIGS. 2a and 2c.

In some embodiments, in addition to adopting the above laser range finder to acquire the point cloud data, exemplarily, a line laser L1 and/or L2 set substantially perpendicular to the ground as shown in FIG. 2a and FIG. 2b may also be used to emit a line laser substantially perpendicular to the ground to the front of the autonomous mobile apparatus 100 to acquire the point cloud data: when the line laser irradiates an obstacle in front, a light spot is formed on the surface of the obstacle (that is, a laser point generated on the surface of the obstacle by irradiating the obstacle in front and being blocked by the obstacle in front), and then an image collecting part set on the autonomous mobile apparatus captures an image of the work environment in front of the autonomous mobile apparatus 100 running forward to collect an image containing the light spot; and then the processing part calculates spatial coordinates of each light spot (that is, the laser point) from the image to obtain the point cloud data, that is, the point cloud data is a light spot or a laser point with known spatial coordinates. The spatial coordinates of the point cloud data herein may be relative coordinates or absolute coordinates. The above ranging device formed by the line laser and the image collecting part in the example may be referred to as a 3D laser scanner. For specific calculation method, refer to *Laser Scanner Calibration Dependency on the Line Detection Method (Martens, et al. Elektronika Ir Elektrotechnika (2015)), Low-Cost 3d Laser Scanning In Air Or Water Using Self-Calibrating Structured Light (Bleier M , A Nüchter. 3D ARCH 2017).*

The present disclosure does not limit the apparatus and manner for acquiring point cloud data.

It should be noted that the image collecting part for acquiring the point cloud data in the ranging step S120 and the surveillance camera in the capturing step S110 may be the same apparatus or different apparatus; if they are the same apparatus, the parameters thereof need to be adjusted in different steps to capture different images, thereby achieving different purposes in different steps. For example, as shown in FIG. 2a, in the capturing step S110, the surveillance camera C1 captures an image (a common image within a visible light wavelength range) of the work environment of the autonomous mobile apparatus and provides the image to the image object recognition model for recognizing an object. Whereas in the ranging step S120, the image collecting part, which is a part of the 3D laser scanner of the above embodiment, can also be a surveillance camera C1, by changing its parameters, the visible light band is filtered by the filter, so that it can only capture the light in the infrared band emitted by the line laser L1 and/or L2 to calculate the spatial coordinates of the point cloud data.

Step S130 (recognizing step): input the above image into an image object recognition model for recognition, to obtain an object in the image and a spatial range of a detection box where the object is located.

In the related art, an image object recognition model is usually used for target detection, and the target detection involved in the present disclosure is object detection or obstacle detection, that is, detection of an obstacle that may block or limit the running of an autonomous mobile apparatus in a work environment. Illustratively, the target detection model may be a YOLO model, and the YOLO model is one of basic network models, and is a neural network model that implements target positioning and recognition by using convolutional neural networks (CNN for short). In a possible implementation, the image object recognition model may comprise but is not limited to a deep learning model. Exemplarily, the image object recognition model is a YOLO v5 model. For details of the above related technology, refer to *Redmon J , Farhadi A .YOLOv3: An Incremental Improvement[J].arXiv e-prints, 2018.DOI:10.48550*/*arXiv.1804.02767,* or refer to https://zhuanlan.zhihu.com/p/150646196, https://blog.csdn.net/yegeli/article/details/109861867, https://zhuanlan.zhihu.com/p/94986199.

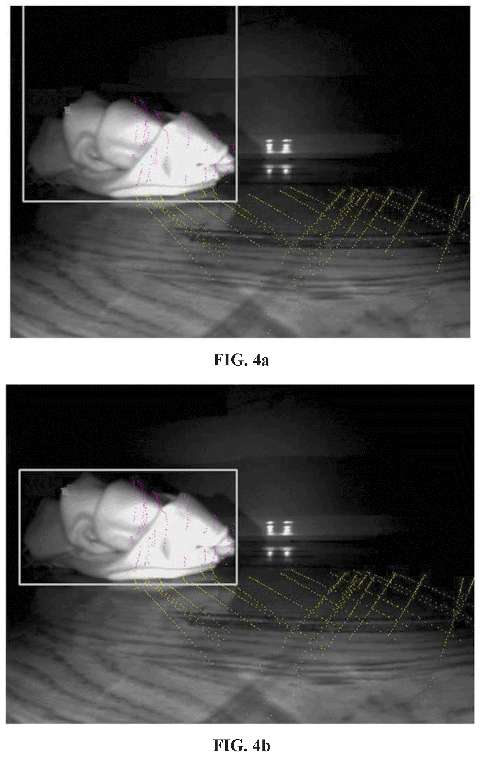

The detection box of the present disclosure refers to that the image object recognition model recognizes the image input therein, and if the image comprises an object (an obstacle in the present disclosure) that can be recognized, the object is framed with a detection box in the output image, so that the object in the image is completely contained by the detection box, as shown in the white boxes in the images of FIGS. 4a and 4b. The spatial range of the detection box is related to the coordinates of the detection box in the image coordinate system. The coordinates of the detection box in the image coordinate system may be represented by (x, y) of the Cartesian coordinate system, and the coordinate position (x, y) of the detection box in the image coordinate system may be converted into the spatial coordinates of the detection box in the three-dimensional spatial coordinate system by using the intrinsic parameter matrix and the extrinsic parameter matrix of the surveillance camera, such as the three-dimensional spatial coordinates (α, β, r) in the spherical coordinate system. For details of coordinate conversion, reference may be made to Lecture 3 "3D space rigid body motion" and Lecture 5 "camera and image" in "Fourteen lectures of visual SLAM: from Theory to Practice ( 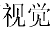 SLAM 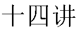 : 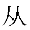 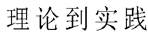 )" (Gao Xiang et al.; Electronic Industry Press; 2017.4.1), or reference https://zhuanlan.zhihu.com/p/144307108. The spatial range of the detection box may be determined by the range of the transverse angle α and the range of the longitudinal angle β.

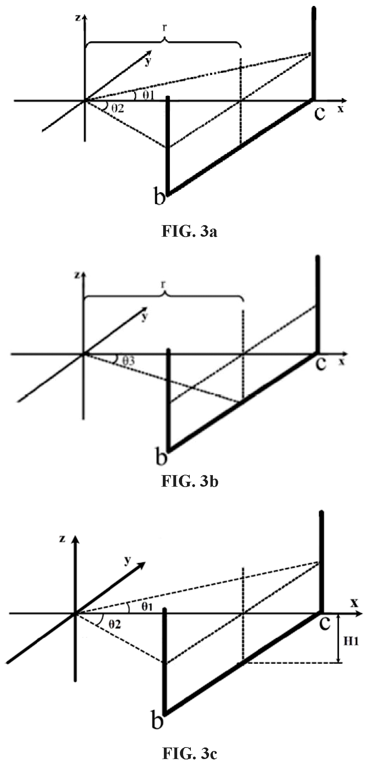

In a first implementation of the embodiment, the spatial range of the detection box comprises a first angle range formed by a transverse lower limit angle θ1, a transverse upper limit angle θ2, and a longitudinal lower limit angle θ3. As shown in FIG. 3a and FIG. 3b, the range of the transverse angle α of the detection box is (θ1, θ2), that is, 01< α < θ2, then the transverse lower limit angle 01 and the transverse upper limit angle θ2 define the range of the detection box in the transverse direction (the horizontal direction or in the xy plane in the Cartesian three-dimensional spatial coordinate system), as shown in FIG. 3a; the range of the longitudinal angle β of the detection box is (θ3,+∞), that is, β > 03, then the longitudinal lower limit angle θ3 defines the range of the detection box in the longitudinal direction (the direction perpendicular to the horizontal plane or in the direction of the z-axis in the Cartesian three-dimensional spatial coordinate system), as shown in FIG. 3b. It can be learned that the first angle range of the detection box in this implementation is a U-shaped range defined by the transverse lower limit coordinate θ1, the transverse upper limit coordinate 02, and the longitudinal lower limit coordinate 03, as shown in FIG. 4a. Exemplarily, in the image shown in FIG. 4a, the angle range defined by the left white frame line, the right white frame line, and the lower white frame line representing the detection box corresponds to the first angle range. Because the monocular surveillance camera cannot acquire distance information (that is, depth information) of an object in an image through the image, the above spatial range of the detection box defined by the transverse lower limit coordinate θ1, the transverse upper limit coordinate θ2, and the longitudinal lower limit coordinate 03 can only be an angle range, and a determined spatial position of the detection box or the object in the detection box cannot be obtained.

Based on the three-dimensional spatial coordinate transformation between the spherical coordinate system and the Cartesian coordinate system, as a variant of the above first implementation, that is, the second implementation of the present embodiment, the longitudinal angle β and the longitudinal lower limit angle θ3 of the detection box in the spherical coordinate system are transformed into the height coordinate Z and the longitudinal lower limit height H1 in the Cartesian three-dimensional spatial coordinate system respectively, that is, Z > H1, as shown in FIG. 3c, then the longitudinal lower limit height H1 defines the range of the detection box in the longitudinal direction (the direction perpendicular to the horizontal plane or the direction of the z-axis in the Cartesian three-dimensional spatial coordinate system), in FIG. 3c, H1 < 0. Therefore, in this implementation, the spatial range of the detection box comprises a first width range (θ1, θ2) defined by the transverse lower limit angle θ1, the transverse upper limit angle 02, and a first height range (H1,+∞) defined by the longitudinal lower limit height H1. Since the monocular surveillance camera cannot acquire distance information (that is, depth information) of an object in an image through the image, the above spatial range of the detection box formed by the first width range (θ1, θ2) defined by the transverse lower limit coordinate θ1, the transverse upper limit coordinate 02, and the first height range (H1,+∞) defined by the longitudinal lower limit height H1 still can only be an angle range, and a determined spatial position of the detection box or the object in the detection box cannot be obtained.

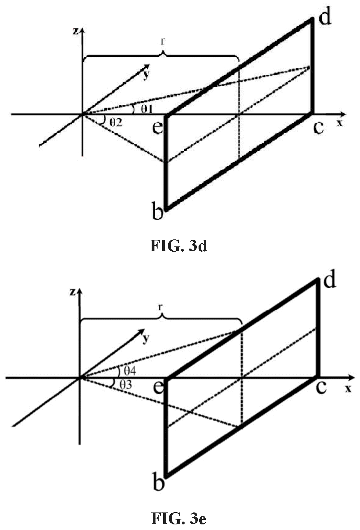

In a third implementation of the embodiment, the spatial range of the detection box comprises a second angle range formed by a transverse lower limit angle θ1, a transverse upper limit angle 02, a longitudinal lower limit angle θ3, and a longitudinal upper limit angle θ4. As shown in FIG. 3d and FIG. 3e, the range of the transverse angle α of the detection box is (θ1, θ2), that is, θ1< α < 02, then the transverse lower limit angle θ1 and the transverse upper limit angle θ2 define the range of the detection box in the transverse direction (the horizontal direction or in the xy plane in the Cartesian three-dimensional spatial coordinate system), as shown in FIG. 3d; the range of the longitudinal angle β of the detection box is (θ3, θ4), that is, θ3< β < θ4, then the longitudinal lower limit angle θ3 and the longitudinal upper limit angle θ4 define the range of the detection box in the longitudinal direction (the direction perpendicular to the horizontal plane or in the direction of the z-axis in the Cartesian three-dimensional spatial coordinate system), as shown in FIG. 3e. It can be learned that the second angle range of the detection box in this implementation is a rectangular box formed by a transverse lower limit coordinate θ1, a transverse upper limit coordinate 02, a longitudinal lower limit coordinate 03, and a longitudinal upper limit coordinate θ4, as shown in the white frame in FIG. 4b. Exemplarily, in the image shown in FIG. 4b, the angle range defined by the left white frame line, the right white frame line, the upper white frame line, and the lower white frame line representing the detection box corresponds to the second angle range. Since the monocular surveillance camera cannot acquire the distance information (i.e., depth information) of the object in an image through the image, the above spatial range of the detection box defined by the transverse lower limit angle θ1, the transverse upper limit angle 02, the longitudinal lower limit angle 03, and the longitudinal upper limit angle θ4 can only be an angle range, and the determined spatial position of the detection box or the object therein cannot be obtained.

It should be noted that this disclosure needs to execute the capturing step S110 before the recognizing step S130, but the execution order of the ranging step S120, the capturing step S110 and the recognizing step S130 is not limited, and that the capturing step S110, the ranging step S120 and the recognizing step S130 can be executed in sequence as shown in FIG. 1, or the ranging step S120 can be executed first and then the capturing step S110 and the recognizing step S130 can be executed, it is also possible to execute the capturing step S110 and the ranging step S120 at the same time (in this case, the image collecting part for acquiring point cloud data in the ranging step S120 and the surveillance camera in the capturing step S110 should be different apparatus) and then execute the recognizing step S130.

Step S140 (acquiring step): acquiring the number of point cloud data within the spatial range of the above detection box.

In the above ranging step 120, point cloud data of the work environment of the autonomous mobile apparatus has been obtained, that is, laser points irradiated onto obstacles in the work environment and their spatial coordinates (spherical coordinate system (α, β, r) or Cartesian coordinate system (x, y, z), and the two can be interchanged through coordinate transformation). Then, through the above recognizing step 130, the spatial range of the detection box framing the object in the image is acquired from the image input to the image object recognition model. Based on the above description, it can be seen that the spatial range of the detection box obtained from the image can only provide an angle range in a certain direction because of the lack of depth information of the detection box, and the specific spatial position of the detection box cannot be determined. However, since the point cloud data comprises the spatial coordinates of the point cloud, which point cloud data is within the spatial range of the detection box can be determined based on the spatial coordinates of the point cloud data, so the number of point cloud data within the spatial range of the detection box can be counted.

In the above first implementation of the embodiment, as shown in FIGS. 3a, 3b, and 4a, the spatial range of the detection box comprises a first angle range defined by a transverse lower limit angle θ1, a transverse upper limit angle 02, and a longitudinal lower limit angle θ3. Based on the spatial coordinates of the point cloud data, from the point cloud data of the work environment of the autonomous mobile apparatus, a first point cloud data set whose spatial coordinates satisfy the transverse angle range (θ1, 02) of the detection box and the longitudinal angle range (θ3,+∞) of the detection box is screened out. The number of point cloud data in the first point cloud data set is counted to obtain the number of point cloud data within the spatial range of the detection box.

In the above second implementation of the embodiment, as shown in FIGS. 3c and 4a, the spatial range of the detection box comprises a first width range (θ1, θ2) defined by the transverse lower limit angle θ1, the transverse upper limit angle θ2, and a first height range (H1,+∞) defined by the longitudinal lower limit height H1. Although this implementation is only based on the first implementation through coordinate transformation, it has practical significance. In practical applications, for ease of calculation, the height of the ground is usually set as the z-axis zero point of the Cartesian coordinate system, that is, the height Z 0= 0 of the ground. Considering that the obstacle in the actual work environment must be higher than the ground (so it can hinder the autonomous mobile apparatus running on the ground in the work environment), the longitudinal lower limit height can be set to H1=0, and only the point cloud data with the height coordinate Z > H1 can be screened, that is, only the laser points reflected by the object higher than the ground can be considered as the point cloud data that conforms the detection box condition (certainly, the premise is that the spatial coordinates of the point cloud data are also within the first width range of the detection box). Certainly, this implementation is not limited to setting H1=0, but also can take the maximum height that the autonomous mobile apparatus can cross as the longitudinal lower limit height H1, for example, if the autonomous mobile apparatus can cross an obstacle with a height of 5 cm, it can set the longitudinal lower limit height H1= 5 cm, and only point cloud data whose Z value is greater than 5 cm is selected, because only point cloud data whose Z value is greater than H1 may block the autonomous mobile apparatus.

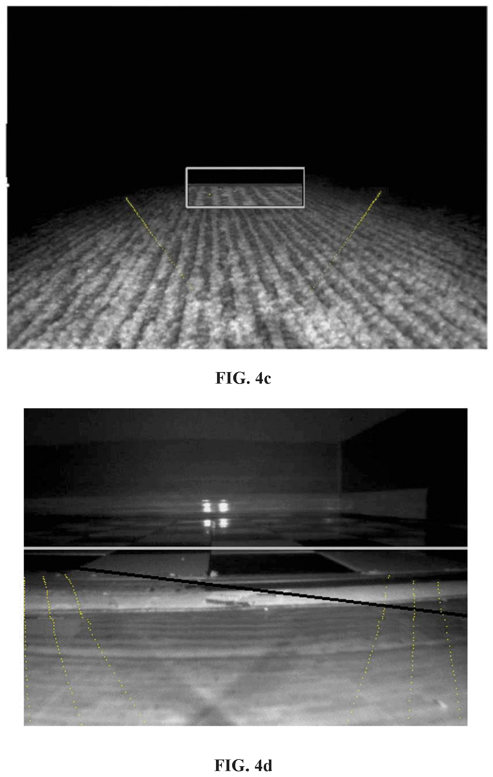

Exemplarily, as shown in FIG. 4d, where the white horizontal line is a line of H1= 0, although yellow laser points are displayed in the image, it can be seen from the figure that these yellow laser points are located below the white horizontal line, that is, their height coordinates Z are all less than 0, so these yellow laser points do not conform to the condition that the height coordinates of the point cloud data are greater than the longitudinal lower limit height H1 of the detection box, so these yellow laser points are not point cloud data that satisfy the detection box.

Exemplarily, the point cloud data conforming to the spatial range of the above detection box may also be screened through other ground segmentation algorithms, specifically referring to M. Himmelsbach, F. v. Hundelshausen and H. -J. Wuensche, "Fast segmentation of 3D point clouds for ground vehicles, " 2010 IEEE Intelligent Vehicles Symposium, La Jolla, CA, USA, 2010, pp. 560-565, doi: 10.1109/IVS.2010.5548059*.*

Therefore, by detecting whether the height coordinates of the point cloud data satisfy the first height range, secondary screening can be performed on the objects recognized in the image, and by using the longitudinal lower limit coordinates 03 or the longitudinal lower limit height H1, false determination of the image object recognition model caused by such as floor patterns can be screened out, thereby improving the reliability of obstacle recognition. If it is found that the obstacle on the ground recognized by the image object recognition model is a misrecognized obstacle rather than a real obstacle, the autonomous mobile apparatus may ignore the image and continue to run normally, so the autonomous mobile apparatus does not need to execute the obstacle avoidance mode or the escape mode for the recognized carpet pattern.

Independent of the above step of determining the point cloud data within the above first height range (H1,+∞) of the detection box, the point cloud data within the first angle range (θ1, 02) of the detection box may be determined according to the spatial coordinates of the point cloud data before, after, or simultaneously with said step. The point cloud data within both the first height range (H1,+∞) of the detection box and the first angle range (θ1, θ2) of the detection box is the first point cloud data set within the spatial range of the detection box. The point cloud data in the first point cloud data set is counted to obtain the number of point cloud data within the spatial range of the detection box.

In the above third implementation of the present embodiment, as shown in FIGS. 3d, 3e, and 4b, on the basis of the first angle range of the first implementation, the longitudinal upper limit coordinate θ4 may be further defined, thereby defining the range of the top boundary on the detection box. That is, the spatial range of the detection box comprises the second angle range formed by the transverse lower limit angle θ1, the transverse upper limit angle θ2, the longitudinal lower limit angle θ3, and the longitudinal upper limit angle θ4, as shown in FIGS. 3d and 3e. Based on the spatial coordinates of the point cloud data, from the point cloud data of the work environment of the autonomous mobile apparatus, a second point cloud data set whose spatial coordinates satisfy the transverse angle range (θ1, θ2) of the detection box and the longitudinal angle range (θ3, θ4) of the detection box is screened out, and the number of point cloud data in the second point cloud data set is the number of point cloud data within the spatial range of the detection box, such as the pink laser points contained in the detection box in the image of FIG. 4b.

Similar to the second implementation of the embodiment, coordinate transformation may also be performed on the transverse lower limit angle, the transverse upper limit angle, the longitudinal lower limit angle, and/or the longitudinal upper limit angle in the third implementation, the spatial coordinates of the point cloud data are transformed between the spherical coordinate system and the Cartesian coordinate system, the spatial coordinates of the point cloud data or the spatial range of the detection box are displayed with appropriate spatial coordinates according to the principle of convenient processing, and the spatial coordinates of the point cloud data are compared with the spatial range of the detection box, so as to screen out the point cloud data within the spatial range of the detection box, and count the number of these point cloud data. For a specific manner, refer to the foregoing implementations, which will not be repeated here.

It should be understood that the present disclosure needs to execute the capturing step S110 and the recognizing step S130 before the acquisition step S 140.

After the number of point cloud data within the spatial range is acquired, the following step S150 may continue to be executed.

Step S150 (determining step): determining whether the number of point cloud data exceeds a preset number threshold. When the number of the point cloud data exceeds a preset number threshold, it is determined that the object actually exists in the work environment, and the following step S160 continues to be executed.

In practice, if the point cloud data within the spatial range of the detection box of a certain image is too little, it may be caused by the error of the ranging device itself, and does not necessarily indicate that there is an object that actually exists in the detection box, so a certain amount of point cloud data is required to confirm that there is indeed an object that actually exists in the detection box recognized by the image object recognition model. Therefore, a number threshold may be preset (for example, based on a statistical rule of a system error or based on experience), and whether there is an object (obstacle) that actually exists in the work environment corresponding to the detection box is determined based on whether a number of point cloud data within a spatial range of the detection box exceeds a preset number threshold. If the number of point cloud data within the spatial range of the detection box does not exceed the preset number threshold, it may be considered that the recognition of the object by the image object recognition model is incorrect, that is, the object recognized by the image object recognition model does not actually exist, but is misrecognized, for example, a floor texture or a carpet pattern is recognized as an obstacle; at this time, the object recognized by the image object recognition model is ignored, or the image is deleted, and correspondingly, the autonomous mobile apparatus is not misguided by the misrecognized object, and does not perform a subsequent response operation (for example, an avoidance step or a marking step described later). Only when the number of point cloud data within the spatial range of the detection box exceeds the preset number threshold, it is considered that the image object recognition model correctly recognizes the object, that is, the object recognized by the image object recognition model actually exists in the work environment, and the autonomous mobile apparatus uses the object as a real obstacle to perform subsequent response steps (such as an avoidance step and a marking step).

In some embodiments, exemplarily, for different objects or object categories, different number thresholds a may be preset. That is, the preset number threshold should correspond to the object category. In a possible implementation, the object is classified into different object categories based on an area and a shape of the object in the image. For example, for two-dimensional surface objects such as clothes, shoes, and walls (the two-dimensional surface objects may be understood as objects that usually present a two-dimensional shape and have a certain area in an image captured under the viewing angle of the autonomous mobile apparatus), the number threshold corresponding to the two-dimensional surface objects may be preset to a1= 100; for strip-shaped objects such as doorsill (different from two-dimensional surface objects, doorsill, fan base, etc., which usually present a strip with a certain width in an image captured under the viewing angle of the autonomous mobile apparatus, and thus are defined as strip-shaped objects), the number threshold corresponding to the strip-shaped objects may be preset to a2= 40; for line-shaped objects such as wires, cables, and tassels of curtains (different from two-dimensional surface objects and strip-shaped objects, line-shaped objects such as wire cables usually present unclear and intermittent thin wires in an image captured under the viewing angle of the autonomous mobile apparatus, and thus are defined as line-shaped objects), the number threshold corresponding to the line-shaped objects may be preset to a3= 10. For example, if the image object recognition model recognizes that the object in the detection box of the image is a strip-shaped object, such as a doorsill, and the number A of point cloud data within the spatial range of the detection box is 50, since 50 > 40 (corresponding to a2 of the strip-shaped object in the above example), it can be considered that the image object recognition model correctly recognizes the object in the detection box, and the object needs to be used as an obstacle of the strip-shaped object for subsequent response operations. In the above example, if the image object recognition model recognizes that the object in the detection box of the image is still a strip-shaped object, and the number A of point cloud data within the spatial range of the detection box is 30, since 30 < 40 (corresponding to a2 of the strip-shaped object in the above example), it is considered that the image object recognition model incorrectly recognizes the object in the detection box, and even if 30 > 10 (corresponding to a3 of the line-shaped object in the above example), it is still not considered that the object recognized by the image object recognition model is real, the image will be ignored or deleted, and the autonomous mobile apparatus will not perform subsequent response operations based on the misrecognized object. In the above example, if the image object recognition model recognizes that the object in the detection box of the image is still a strip-shaped object, and the number A of point cloud data within the spatial range of the detection box is 110, since 110> 40(corresponding to a2 of the strip-shaped object in the above example), it can be considered that the image object recognition model correctly recognizes the object in the detection box, even if 110> 100(corresponding to a1 of the two-dimensional surface object in the above example), it can still be considered that the object recognized by the image object recognition model is a strip-shaped object (that is, as long as the number of point cloud data exceeds the preset number threshold corresponding to the recognized category of the object, the recognition category of the object by the image object recognition model is recognized; here is only an example and should not be used as a limitation to the present disclosure), and the object is used as an obstacle of the strip-shaped object for subsequent response operations.

Exemplarily, as shown in FIG. 4a and FIG. 4b, the image object recognition model recognizes that the object in the white detection box in the image is clothes, an object category thereof is a two-dimensional surface object, and the number of point cloud data within the spatial range of the detection box in the image is calculated to be 200, 200 > 100 (corresponding to a1 of the two-dimensional surface object in the above example), so the number of point cloud data within the spatial range of the detection box exceeds the number threshold a1 corresponding to the two-dimensional surface object, so it can be considered that the image object recognition model correctly recognizes the object in the detection box, and it is determined that the recognized clothes actually exist in the work environment of the autonomous mobile apparatus.

Exemplarily, as shown in FIG. 4c, the image object recognition model recognizes that the object in the white detection box in the image is a doorsill, an object category thereof is a strip-shaped object, and the number of point cloud data within the spatial range of the detection box in the image is calculated to be 3, 3 < 40 (corresponding to a2 of the strip-shaped object in the above example), so the number of point cloud data within the spatial range of the detection box does not exceed the number threshold a2 corresponding to the strip-shaped object, so it is considered that the image object recognition model incorrectly recognizes the object in the detection box, and it is determined that the recognized doorsill does not actually exist in the work environment of the autonomous mobile apparatus.

It should be understood that the setting rule of the number threshold in the present disclosure should not be limited to setting the number threshold corresponding to the object category, and the number threshold may be set according to actual application cases, for example, the number threshold may be set according to the object size, the object material, etc. In addition, the present disclosure does not specifically limit the execution order of the step of presetting number threshold and other steps, and in fact, the steps of presetting number threshold may be executed earliest.

Step S160 (object positioning step): calculating the spatial position of the detection box according to the point cloud data within the spatial range of the detection box when the number of the point cloud data exceeds a preset number threshold. The spatial position of the detection box represents the spatial position of the object in the detection box in the work environment, that is, the spatial position of the object (obstacle) is the spatial position of the detection box where the object is located.

As described above, since the image has no depth information, it is difficult to obtain an accurate spatial position of the object within the detection box from the image captured in the capturing step S110. When the number of the point cloud data exceeds the preset number threshold, that is, it is recognized that the object in the detection box is an obstacle that actually exists in the work environment, at this time, exemplarily, the spatial position of the point cloud data within the spatial range of the detection box represents the spatial position of the detection box in the image, and also represents the spatial position of the object in the detection box in the work environment. A representative point of the detection box (a point that can represent a key position of the detection box, for example, a geometric centroid or a symmetry center of the detection box) is calculated by using a statistical method, or one or some point cloud data that conforms a condition is selected as a representative point of the detection box, a distance (referred to as a representative point distance) between a spatial position of the representative point of the detection box and the autonomous mobile apparatus is calculated, a distance (referred to as an estimated distance) between the detection box and the autonomous mobile apparatus is calculated based on the representative point distance, and a spatial position of the detection box is calculated based on the estimated distance and a spatial range of the above detection box.

It should be noted that considering that when the object recognized by the image object recognition model does not actually exist in the work environment of the autonomous mobile apparatus, the recognized object does not actually exist, the autonomous mobile apparatus would not perform a subsequent response operation based on the misrecognized object, and does not need to calculate a spatial position of the misrecognized object in the work environment, and naturally does not need to calculate a spatial position of a detection box that frames the misrecognized object. Therefore, the object positioning step S160 may be executed to calculate the spatial position of the detection box only when it is determined in the determining step S150 that the number of the point cloud data exceeds the preset number threshold, thereby reducing operation time and saving computing power.

The following describes how to calculate a spatial position of a detection box based on point cloud data: for a detection box in which a number of point cloud data within a spatial range exceeds a preset number threshold, a laser point with a smallest distance from a center of a surveillance camera may be selected from these point cloud data as a representative point of the detection box, a representative point distance between the representative point of the detection box and a center of a surveillance camera C1 is calculated, and a projection of the representative point distance on an optical axis of the surveillance camera is used as a distance r between the detection box and the surveillance camera (which may be used as an estimated distance between the detection box and the autonomous mobile apparatus). The spatial position of the detection box may be calculated according to the above estimated distance r and the spatial range of the detection box. Exemplarily, taking the above third implementation in combination with FIGS. 3d and 3e as an example, the spatial position of the detection box may be calculated according to the estimated distance r, the angles θ1 and θ2 involved in the above transverse angle range, and the angles θ3 and θ4 involved in the longitudinal angle range. For example, the three-dimensional spatial coordinates of the four corner points (b, c, d, e) of the detection box shown in FIG. 3d and FIG. 3e in the Cartesian coordinate system may be calculated by adopting the following formulas: b (x, y, z) = r × (1, tan (θ2), tan (θ3)); c (x, y, z) = r × (1, tan (θ1), tan (θ3)); d (x, y, z) = r × (1, tan (θ1), tan (θ4)); and e (x, y, z) = r × (1, tan (θ2), tan (θ4)). After the spatial coordinates of the four corner points (b, c, d, e) of the detection box are determined, the spatial position of the detection box is determined.

Certainly, the representative point of the detection box may alternatively be selected in another manner, for example, an average spatial coordinate of all point cloud data is calculated according to spatial coordinates of all point cloud data within a spatial range of the detection box, and the average spatial coordinate is used as the representative point of the detection box, or a spatial coordinate of actual point cloud data closest to the average spatial coordinate is used as the representative point of the detection box; or transverse coordinates (for example, x-axis coordinates) of two pieces of point cloud data with a farthest transverse span within the spatial range of the detection box are averaged as transverse coordinates of the representative point of the detection box, longitudinal coordinates (for example, z-axis coordinates) of two pieces of point cloud data with a farthest longitudinal span within the spatial range of the detection box are averaged as longitudinal coordinates of the representative point of the detection box, and depth coordinates (for example, r coordinates in FIG. 3a, FIG. 3b, FIG. 3d, and FIG. 3e) of two pieces of point cloud data with a farthest span in the depth direction (that is, a surveillance camera optical axis direction) within the spatial range of the detection box are averaged as depth coordinates of the representative point of the detection box, to obtain the spatial coordinate of the representative point of the detection box. A manner of selecting the representative point of the detection box is not limited in the present disclosure.

It should be noted that although the spatial position of the detection box is used to represent the spatial position of the object in the embodiment, it should not be limited to using the spatial position of the detection box to represent the spatial position of the object, because the object may also be represented according to point cloud data in the detection box that is close to the autonomous mobile apparatus, that is, a part of valid point cloud data in the detection box represents the object. In fact, the spatial position of the detection box itself is not important, but its purpose is to find the object therein and determine its position.

Therefore, considering that the autonomous mobile apparatus can collect and update the point cloud data, and calculate the information of the object in the surrounding environment according to the point cloud data (such as calculating the relative coordinates and absolute coordinates of the object, and calculating the distance between the autonomous mobile apparatus and each object in the surrounding environment, etc.), according to the present disclosure, the autonomous mobile apparatus uses the image object recognition model to recognize the object in the image and the spatial range of the detection box where the object is located, determines whether the object actually exists in the work environment according to whether the number of the point cloud data within the spatial range exceeds the preset number threshold, and calculates the spatial position of the detection box according to the point cloud data within the spatial range of the detection box when the object actually exists in the work environment. Therefore, in the present disclosure, the image object recognition model is combined with the point cloud data, and the point cloud data is used to perform secondary confirmation on the object recognized by the image object recognition model, thus it may avoid misrecognition of the object or false determination of the position of the object, improving the accuracy of obstacle recognition and obstacle avoidance of the autonomous mobile apparatus, and further improving the degree of intelligence of the autonomous mobile apparatus.

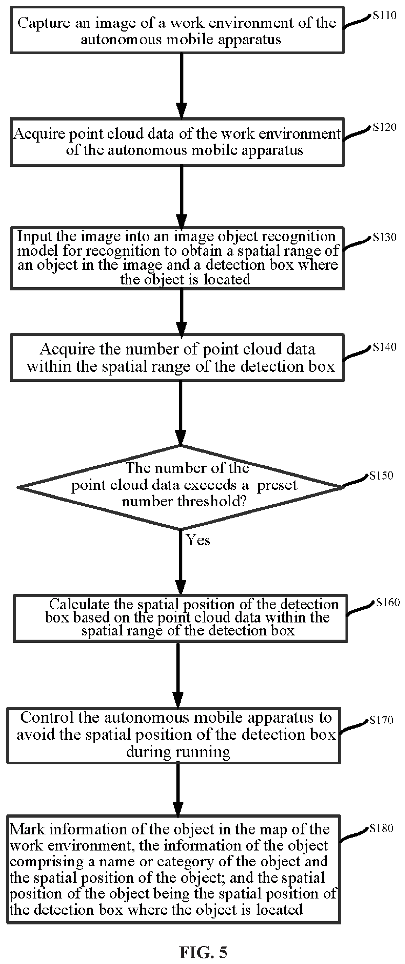

In some embodiments, as shown in FIG. 5, after determining the spatial position of the detection box (i.e., the spatial position of the object in the detection box), the control method of the autonomous mobile apparatus may further comprise step S170(avoidance step): controlling the autonomous mobile apparatus to avoid the spatial position of the detection box during running. In this case, the autonomous mobile apparatus may be controlled to run in the avoidance mode, exemplarily, the autonomous mobile apparatus may be moved back to a set distance first, then rotated by a set angle, and then ran forward after a running direction is changed. Exemplarily, the avoidance mode may also be moved back to a set distance first, and then run along a forward arc according to a curve to bypass the obstacle recognized in front.

In some embodiments, as shown in FIG. 5, after calculating the spatial position of the detection box (i.e., the spatial position of the object in the detection box), the control method of the autonomous mobile apparatus may further comprise step S180(marking step): marking information of the object in the map of the work environment, the information of the object comprising a name or category of the object and the spatial position of the object, and the spatial position of the object being the spatial position of the detection box where the object is located. Certainly, other information such as the distance between the object and the autonomous mobile apparatus and the size of the object may also be marked, so that the user may know the information of the object existing in the work environment according to the map.

It should be noted that the present disclosure does not limit the execution order of the avoidance step S170 and the marking step S180, and the avoidance step S170 may be executed first and then the marking step S180 may be executed as shown in FIG. 5, or the marking step S180 may be executed first and then the avoidance step S170 may be executed, or the avoidance step S170 and the marking step S180 may be executed simultaneously.

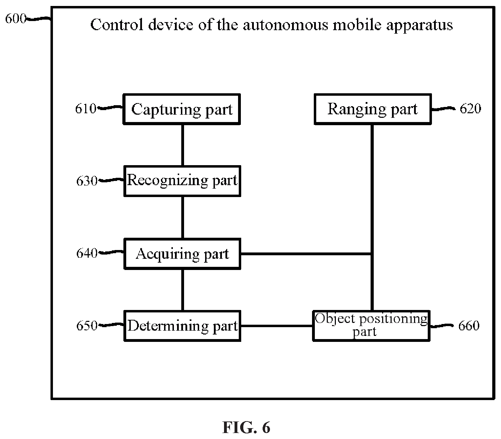

FIG. 6 shows a block diagram of a control device for an autonomous mobile apparatus according to an exemplary embodiment, and as shown in FIG. 6, the control device 600 may comprise a capturing part 610, a ranging part 620, a recognizing part 630, an acquiring part 640, a determining part 650, and an object positioning part 660. The capturing part 610 is configured to capture an image of a work environment of the autonomous mobile apparatus. The ranging part 620 is configured to acquire point cloud data of a work environment of the autonomous mobile apparatus. The recognizing part 630 is connected to the capturing part 610, and is configured to input the image into an image object recognition model for recognition, to obtain an object in the image and a spatial range of a detection box where the object is located. The acquiring part 640 is connected to the recognizing part 630 and the ranging part 620, and is configured to acquire the number of point cloud data within the spatial range of the detection box. The determining part 650 is connected to the acquiring part 640 and is configured to determine whether the number of the point cloud data exceeds a preset number threshold. The object positioning part 660 is connected to the determining part 650 and the ranging part 620, and is configured to calculate the spatial position of the detection box according to the point cloud data within the spatial range of the detection box when the number of the point cloud data exceeds a preset number threshold.

In a possible implementation, the control device 600 may further comprise a marking part (not shown), configured to mark information of the object in a map of the work environment, the information of the object comprises a name or a category of the object and a spatial position of the object, and the spatial position of the object is a spatial position of a detection box where the object is located.

In a possible implementation, the control device 600 may further comprise an avoidance part (not shown) configured to control the autonomous mobile apparatus to avoid a spatial position of the detection box during running.

In a possible implementation, the spatial range of the detection box comprises a first angle range formed by a transverse lower limit angle, a transverse upper limit angle, and a longitudinal lower limit angle.

In a possible implementation, the spatial range of the detection box comprises a first width range defined by a transverse lower limit angle and a transverse upper limit angle, and a first height range defined by a longitudinal lower limit height.

In a possible implementation, the spatial range of the detection box comprises a second angle range formed by a transverse lower limit angle, a transverse upper limit angle, a longitudinal lower limit angle, and a longitudinal upper limit angle.

In a possible implementation, the preset number threshold corresponds to a category of an object recognized by the image object recognition model; and the determining part 650 may be configured to determine whether the number of the point cloud data exceeds a preset number threshold corresponding to the category of the object.

Regarding the device in the above embodiments, the specific manner in which each part executes operations has been described in detail in the embodiments related to the method, and will not be described in detail here.

Therefore, compared with the prior art in which only the recognition accuracy of the image object recognition model for the object in the image is improved, in the present disclosure, the image object recognition model is combined with the point cloud data, and the point cloud data is used to perform secondary confirmation on the object recognized by the image object recognition model, thus it may avoid misrecognition of the object or false determination of the position of the object, improving the accuracy of obstacle recognition and obstacle avoidance of the autonomous mobile apparatus, and further improving the degree of intelligence of the autonomous mobile apparatus.

Each embodiment of the present disclosure has been described above, and the above description is exemplary, not exhaustive, and is not limited to the disclosed each embodiment. Many modifications and variations will be apparent to those of ordinary skill in the art without departing from the scope and spirit of the described each embodiment. The terminology used herein was chosen to best explain the principles of each embodiment, the practical application or technical improvement over technologies found in the marketplace, or to enable others of ordinary skill in the art to understand the each embodiment disclosed herein.

## Claims

1. A control method for an autonomous mobile apparatus, comprising:
a capturing step, capturing an image of a work environment of the autonomous mobile apparatus;
a ranging step, acquiring point cloud data of the work environment of the autonomous mobile apparatus;
a recognizing step, inputting the image into an image object recognition model for recognition to obtain an object in the image and a spatial range of a detection box where the object is located;
an acquiring step, acquiring a number of point cloud data within the spatial range of the detection box;
a determining step, determining whether a number of the point cloud data exceeds a preset number threshold;
an object positioning step, calculating the spatial position of the detection box based on the point cloud data within the spatial range of the detection box in response to the number of the point cloud data exceeding the preset number threshold.

2. The control method according to claim 1, wherein after the object positioning step, the method further comprises:
a marking step, marking information of the object in a map of the work environment, wherein the information of the object comprises a name or a category of the object and a spatial position of the object, and the spatial position of the object is a spatial position of a detection box where the object is located.

3. The control method according to claim 1, wherein after the object positioning step, the method further comprises:
an avoidance step, controlling the autonomous mobile apparatus to avoid a spatial position of the detection box during running.

4. The control method according to claim 1, wherein the spatial range of the detection box comprises a first angle range formed by a transverse lower limit angle, a transverse upper limit angle, and a longitudinal lower limit angle.

5. The control method according to claim 1, wherein the spatial range of the detection box comprises a first width range defined by a transverse lower limit angle, a transverse upper limit angle, and a first height range defined by a longitudinal lower limit height.

6. The control method according to claim 1, wherein the spatial range of the detection box comprises a second angle range formed by a transverse lower limit angle, a transverse upper limit angle, a longitudinal lower limit angle, and a longitudinal upper limit angle.

7. The control method according to claim 1, wherein
the preset number threshold corresponds to a category of an object recognized by the image object recognition model; and
the determining step comprises determining whether the number of the point cloud data exceeds a preset number threshold corresponding to the category of the object.

8. A control device for autonomous mobile apparatus, comprising:
a capturing part configured to capture an image of a work environment of the autonomous mobile apparatus;
a ranging part configured to acquire point cloud data of the work environment of the autonomous mobile apparatus;
a recognizing part configured to input the image into an image object recognition model for recognition to obtain an object in the image and a spatial range of a detection box where the object is located;
an acquiring part configured to acquire a number of point cloud data within the spatial range of the detection box;
a determining part configured to determine whether a number of the point cloud data exceeds a preset number threshold;
an object positioning part configured to calculate the spatial position of the detection box based on the point cloud data within the spatial range of the detection box in response to the number of the point cloud data exceeding the preset number threshold.

9. A control device for autonomous mobile apparatus, comprising:
a processor;
a memory for storing processor-executable instructions;
wherein the processor is configured to implement the control method of any one of claims 1 to 7 when executing the instructions stored in the memory.

10. An autonomous mobile apparatus, comprising:
a moving part configured to move the autonomous mobile apparatus over a work surface in a work area; and
a control device according to claim 8 or 9.

11. A non-transitory computer-readable storage medium, wherein when instructions in the storage medium are executed by a processor, the processor is caused to execute the control method according to any one of claims 1 to 7.
